(19) **Europäisches Patentamt / European Patent Office / Office européen des brevets**

(11) **EP 1 935 753 A1**

(12) **EUROPEAN PATENT APPLICATION**

(43) Date of publication:
**25.06.2008 Bulletin 2008/26**

(51) Int Cl.:
**B62D 5/04** (2006.01)

(21) Application number: **07024660.8**

(22) Date of filing: **19.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **20.12.2006 JP 2006342086**

(71) Applicant: **NSK Ltd.
Tokyo 141-8560 (JP)**

(72) Inventor: **Yamamoto, Satoshi
Maebashi-shi
Gunma 371-8527 (JP)**

(74) Representative: **Grünecker, Kinkeldey,
Stockmair & Schwanhäusser
Anwaltssozietät
Leopoldstrasse 4
80802 München (DE)**

(54) **Electric power steering system**

(57)    There is provided an electric power steering system including a motor (200) for imparting a steering assist force to a steering system of a vehicle, a current command value determination unit (210) which determines a current command value based on a steering torque and a vehicle speed, a motor angular velocity detection unit which detects or estimates an angular velocity of the motor, and a drive control unit which controls the motor based on the current command value so determined, the electric power steering system including a protecting function unit (250) which prevents the overheat of the motor or the whole of a control system and a response control unit which decreases the response of a current control when it is judged a holding steering state.

*FIG. 1*

## Description

Technical Field

The present invention relates to an electric power steering system and more particularly to an electric power steering system which has improved the steering feeling when the protecting function such as the rack end protecting function is in operation and when the response control function is in operation.

Related Art

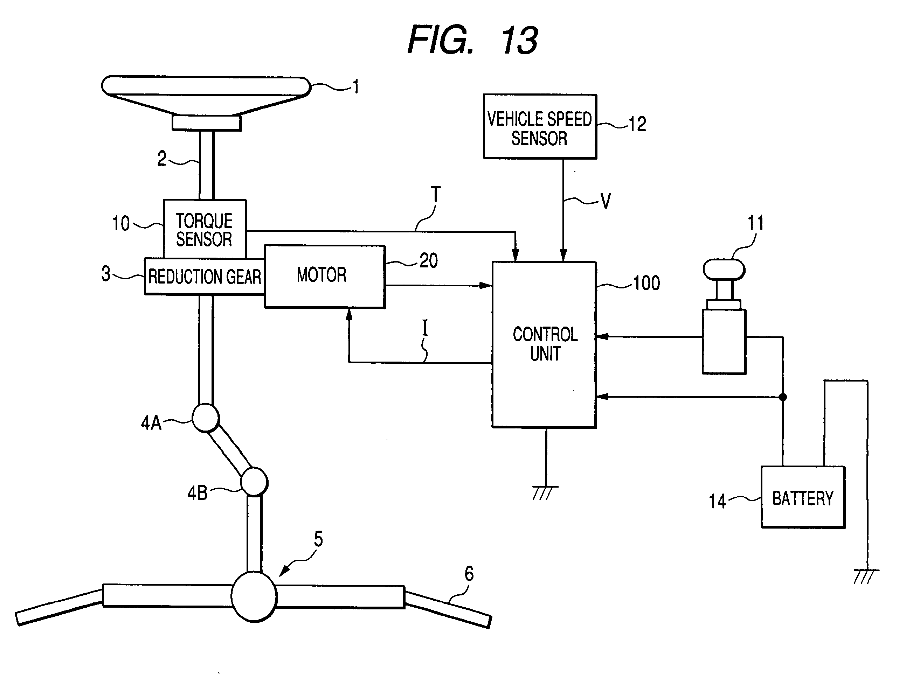

An electric power steering system for imparting an assist force (a steering assist force) to a steering system of a vehicle by virtue of the rotational force of a motor is configured such that the rotational force of the motor is imparted to a steering shaft or a rack shaft as a steering assist force by a transmission mechanism such as gear wheels or a belt via a reduction mechanism. The configuration of an electric power steering system like this will be described by reference to Fig. 13.

In the electric power steering system described above, a column shaft 2 of a steering wheel 1 is coupled to tie rods 6 of steered wheels by way of a reduction gear 3, universal joints 4A and 4B, and a rack-and-pinion mechanism 5. A torque sensor 10 for detecting a steering wheel torque exerted on the steering wheel 1 is provided on the column shaft 2, and a motor 20 for assisting in imparting steering effort to the steering wheel 1 is coupled to the steering shaft 2 via the reduction gear 3. Electric power is supplied from a battery 14 to a control unit 100 for controlling the power steering system, and an ignition key signal is inputted into the control unit 100 by way of an ignition key 11. A steering wheel torque T from the torque sensor 10 and a vehicle speed V detected by a vehicle speed sensor 12 are also inputted into the control unit 100, where an operation is performed to calculate a steering assist command value I of an assist command, so as to control current supplied to the motor 20 based on the steering assist command value I so calculated.

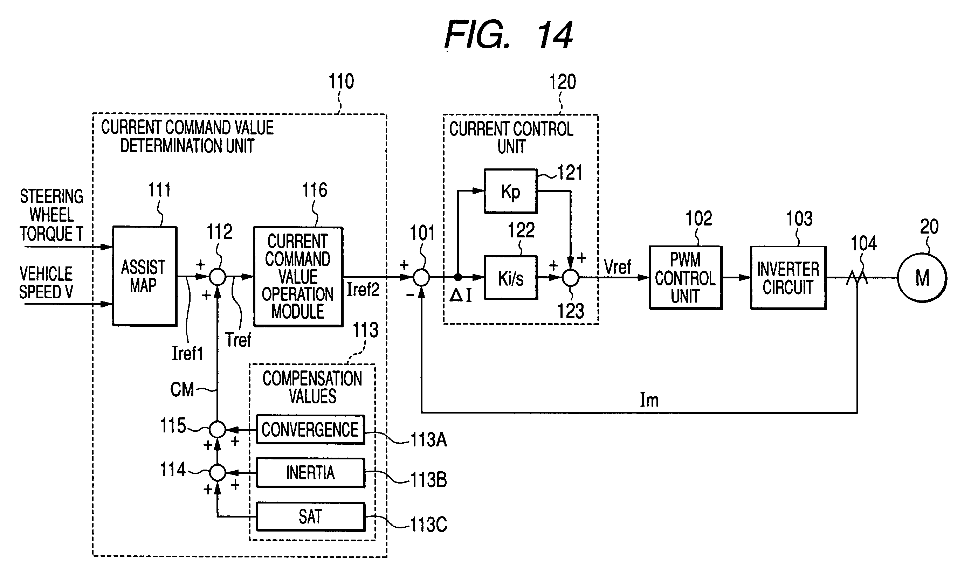

A control unit for the electric power steering system configured as has been described above will be described by reference to Fig. 14.

A steering wheel torque T detected by the torque sensor and a vehicle speed V detected by the vehicle speed sensor 12 are inputted into an assist map 111 within a current command value determination unit 110, and a steering assist command value Iref1 is added to an adder unit 112. In addition, compensation values calculated in a compensation value operation unit 113, for example, compensation values for convergence, inertia and SAT (self-aligning torque) calculated, respectively, in a convergence operation module 113A, an inertia operation module 113B and an SAT estimation module 113C are added in adder units 114 and 115. Then, a compensation value CM so obtained is added to the steering assist command value Iref1 in the adder unit 112, so as to determine a torque command value Tref. The torque command value Tref is then inputted into a current command value operation unit 116, and the current command value operation unit 116 determines a current command value Iref2 based on the torque command value Tref so inputted and then outputs the current command value Iref2 so determined to a subtracter unit 101. In addition, a motor current Im, which is to be supplied to the motor 20, is detected in a current detection unit 104 and is then inputted into the subtracter unit 101 for subtraction. In the subtracter unit 101, a deviation ∆I (= Iref2 - Im) between the current command value Iref2 and the motor current Im so detected is calculated.

In addition, when the motor 20 is a brushless DC motor, in addition to the torque command value Tref, a rotor angle θ of the rotor thereof is inputted into the current command value operation unit 116.

The deviation ∆I calculated in the subtracter unit 101 is inputted into a proportional control module 121 (a proportional gain Kp) and an integral control module 122 (an integral gain Ki) of a current control unit 120. Outputs from the proportional control module 121 and the integral control module 122 are added together in an adder module 123, and an added value is outputted as a voltage command value Vref. The voltage command value Vref is then inputted into a PWM control unit 102, and a PWM signal generated therein is inputted into an inverter circuit 103 for driving the motor 20.

Thus, what has been described heretofore is the example in which the proportional and integral controls are used in the current control unit 120 in the control of the electric power steering system. Here, when expressing a gain. Gi associated with the proportional and integral controls by an equation, it will be expressed by Equation 1 below.

[Equation 1]

$$|Gi| = \lim_{s \to 0}\left(Kp + \frac{Ki}{s}\right) \approx \infty$$

Namely, even though the deviation ∆I is a small value, since the gain Gi becomes infinity, the voltage command value Vref is outputted as a large value even in a holding steering state in which the steering is held or when the steering wheel is rotated slowly, and the following problems will be produced.

Namely, in recently developed electric power steering systems, although the capacity is increased, since the AD converter which is used in the control unit which is configured mainly by a CPU continues to have a resolution performance of 10 bits in order to prevent an increase in the production costs, the resolution performance becomes relatively rough under the circumstances in which a large current tends to be used. In addition, an error such as noise that is produced by the roughness of the resolution performance is amplified by a feedback gain in which the gain becomes infinity which results when the deviation $\Delta I$ is small which results, in turn, in the holding steering state or when the steering wheel is rotated slowly, and the operation error so amplified causes the vibration and noise of the steering wheel, resulting in a problem of causing the driver to feel an uncomfortable sensation.

Incidentally, in current control of the electric power steering system, in general, an integral control (I control), a proportional-plus-integral control (PI control) and a proportional-plus-integral-plus-derivative control (PID control) are used. However, in a current control including an integral term, since its gain becomes infinity in a steady state, in the holding steering state or when the steering wheel is rotated slowly, which is the steady state of an electric power steering system, the driver feels vibration and/or noise via the steering wheel, and this results in a problem that the driver feels the sensation of uncomfortableness when the driver operates the steering wheel.

Then, Japanese Patent Unexamined Publication JP-A-2000-108916 provides an electric power steering system in which in a feedback control, a device for solving the problem described above is provided in which an adjusting gain is provided before a deviation between a current command value and an actual motor current is inputted into a current control system including an integral term, so that when the deviation is small, the adjusting gain is made small, whereas when the deviation is large, the adjusting gain is made large.

With the electric power steering system described in JP-A-2000-108916, it is difficult to make a design to determine the adjusting gain which varies according to a deviation in current feedback, and since the gain of the integral term is infinity, even in the event that the adjusting gain is made as small as possible, the total gain becomes large. Hence, the problem still remains unsolved that vibration and/or noise is felt which is produced in the holding steering state or when the steering wheel is rotated slowly.

In addition, when external noise is inputted into the control unit together with a signal in which it is mixed, a current command value is calculated erroneously based on the noise signal, and minute vibration is generated in the steering wheel, whereby there may be caused a problem that the steering feel is worsened. This vibration appears specifically in the holding steering state.

Then, in order to prevent the minute vibration of the steering wheel in the holding steering state, it is judged whether the holding steering state or a steering state in which the steering wheel is rotated, and a current command value is set lower in the holding. steering state than that in the steering state. Whether the holding steering state or the steering state can be judged by detecting a rotation speed (an angular velocity) of the motor. Namely, in the event that the rotational speed of the motor is equal to or smaller than a predetermined speed, it is judged that the steering wheel is in the holding steering state, and in the event that the rotational speed is larger than the predetermined speed, the steering wheel is in the steering state.

In the event that whether the holding steering state or the steering state is judged based on only the rotational speed of the motor, however, since the rise in rotational speed of the motor becomes slow, for example, when the steering wheel is rotated in one direction from a state in which it is held in a neutral position (in a state in which the vehicle is traveling straight ahead), there is generated a delay in detecting that the steering wheel has been switched from the state in which it is held in the neutral position to the state in which it is being rotated, and there is a fear that there may be caused a delay in effecting a required steering assist.

Another Japanese Patent Unexamined Publication JP-A-2001-253358 discloses an electric power steering system as one which provides a means for solving the problem described above.

Namely, in the electric power steering system disclosed in JP-A-2001-253358, there are provided a torque derivative value detection unit which detects a torque derivative value which is a time variation of steering wheel torque exerted to a steering means in an electric power steering control, a state judgment means for judging whether the steering unit is in the holding steering state or in a steering state based on a torque derivative value detected by the torque derivative value detection unit and a control gain setting unit which sets a control gain for a motor.

In the system disclosed in JP-A-2001-253358, however, when the rack end protecting function for decreasing the current so that the motor and/or the control unit (ECU) is made difficult to be overheated operates to limit the output current in order to prevent the overheat of the motor and/or the control unit, in particular, when the current is increased in the vicinity of a rack end and at the same time, the response control function operates to decrease the function gain, vibration is generated in the vicinity of the rack end, resulting in a problem that the driver receives strange feeling.

## SUMMARY OF THE INVENTION

The invention has been made in view of the situations and an object thereof is to provide an electric power steering system which can reduce vibration and noise generated when the steering is held while securing the operating performance when the steering wheel is operated normally and which can attain a steering feel which does not cause the driver to receive the strange feeling even when the protecting functions to protect the rack end and the motor and/or the control unit from overheat operates and even when the response control is in operation.

According to an aspect of the invention, there is provided an electric power steering system including:

a motor for imparting a steering assist force to a steering system of a vehicle;
a current command value determination unit which determines a current command value based on a steering torque and a vehicle speed;
a motor angular velocity detection unit which detects or estimates an angular velocity of the motor;
a drive control unit which controls the motor based on the current command value so determined;
a protecting function unit which prevents an overheat of the motor or a whole of a control system; and
a response control unit which decreases a response of a current control when it is judged that a steering wheel is in a holding steering state in which the steering wheel is held.

In addition, according to another aspect of the invention, there is provided an electric power steering system wherein
the response of the current control is made to be switched based on a judgment made by the protecting function unit.

Further, according to still another aspect of the invention, there is provided an electric power steering system wherein
only when the response control unit operates at the same time as the protecting function unit operates, a recovery time of the response of the current control when reset from a judgment of the holding steering state is made shorter than a normal state.

Furthermore, according to still another aspect of the invention, there is provided an electric power steering system, wherein
when the protecting function unit operates, the response control unit is made not to operate.

Further, according to another aspect of the invention, there is provided an electric power steering system, wherein there are set:

a first gradual changing time of the response of the response control unit when shifting from a judgment of a steering state in which the steering wheel is rotated to the judgment of the holding steering state and
a second gradual changing time of the response of the response control unit when shifting from the judgment of the holding steering state to the judgment of the steering state,
wherein the first and second gradual changing time are set individually.

Further, according to another aspect of the invention, there is provided an electric power steering system, wherein

the protecting function unit includes at least one of a rack end protecting function and an overheat protecting function.

Further, according to another aspect of the invention, there is provided an electric power steering system, wherein
the response control unit includes:

a steering wheel operating state detection module which:

detects a steering wheel operating state;
outputs a signal which indicates the holding steering state when detecting the holding steering state; and
does not to output the signal which indicates the holding steering state when detecting that the steering wheel is in any other state than the holding steering state; and

a switching control module which sets the response of the current control unit such that a response resulting when the holding steering state is detected becomes slower than a response resulting when the holding steering state is not detected.

Further, according to another aspect of the invention, there is provided an electric power steering system, wherein
the response control unit controls such that:

making the response of the current control ramp down for a period of time T1 at the same time as the holding steering state is detected from the steering state in the steering wheel operating state detection module; and
making the response of the current control ramp up for a period of time T2 at the same time as a release of the holding steering state is detected in the steering wheel operating state detection module, and

wherein the periods of time T1 and T2 are set individually.

Further, according to another aspect of the invention, there is provided an electric power steering system, wherein
the response control unit controls such that:

after a time when the protecting function unit is not in operation, the steering wheel operating state detection module outputs the signal which indicates the holding steering state and the response control unit controls to make the response of the current control ramp down by the response control unit, making the response of the current control ramp up for a period of time T3, when the steering wheel operating state detection unit cancels the signal which indicates the holding steering state; and
after a time when the protecting function unit is in operation, the steering wheel operating state detection module outputs the signal which indicates the holding steering state and the response control unit controls to make the response of the current control ramp down, making the response of the current control ramp up for a period of time T2, when the steering wheel operating state detection unit cancels the signal which indicates the steering holding, and wherein the periods of time T2 and T3 are set individually.

According to the electric power steering system of the invention, provided are the protecting function unit which includes the overheat protecting function to prevent the overheat of the motor or the whole of the control system (the control unit, an FET as a motor drive device and a wiring harness are included) and the rack end protecting function to ramp down the current in the vicinity of the rack end and the response control unit which decreases the response of the current control when the steering is held, and making the recovery time of the response of the current control when reset from the judgment of the holding steering state shorter than normal only when the response control unit operates at the same time that the protecting function unit operates or making the response control unit inoperative when the protecting function unit operates. Therefore, vibration and/or noise generated in the steering wheel in the holding steering state can be reduced, while the operating performance of the steering wheel when it is operated normally can be secured. Further, even when the response control is in operation, the occurrence of the driver receiving the strange feeling or torque variation can be prevented. In addition, the occurrence of the driver receiving the strange feeling or torque variation in the vicinity of the rack end can also be prevented when the protecting function unit operates.

In addition, according to the invention, vibration can be compensated for only by making a minor modification to the existing functions without requiring a large software change, and since only the problematic phenomena (vibration and abnormal noise) are improved, the steering feel, which is another aspect of the steering system, is less influenced.

BRIEF DESCRIPTION OF THE DRAWINGS

Fig. 1 is a block diagram showing the configuration, of a control unit which constitutes a premise of the invention;
Fig. 2 is a block diagram showing the configuration of a control unit which constitutes a premise of the invention;
Fig. 3 is a.block diagram showing the configuration of a control unit which constitutes a premise of the invention;

Fig. 4 is a circuit diagram showing a specific configuration example of a current controller;
Fig. 5 is an exemplary diagram which explains a change in current control response;
Fig. 6 is a block diagram showing a configuration example of a control unit of Embodiment 1 of the invention;
Fig. 7 is a flowchart illustrating an operation example of Embodiment 1 of the invention;
Fig. 8 is a diagram showing an operation example of the invention;
Fig. 9 is a block diagram showing a configuration example of a control unit of Embodiment 2 of the invention;
Fig. 10 is a flowchart illustrating an operation example of Embodiment 2 of the invention;
Fig. 11 is a block diagram showing a configuration example of a control unit of Embodiment 3 of the invention;
Fig. 12 is a block diagram showing a configuration example of a control unit of Embodiment 4 of the invention;
Fig. 13 is a diagram showing the configuration of a general conventional electric power steering system; and
Fig. 14 is a block diagram showing an example of a control unit of the conventional electric power steering system.

DETAILED DESCRIPTION OF THE PREFERED EMBODIMENTS

In an electric power steering system of the present invention, provided are a protecting function unit which includes an overheat protecting function to prevent the overheat of a motor or the whole of a control system (a control unit, an FET as a motor drive device and a wiring harness are included) and a rack end protecting function to ramp down the current in the vicinity of a rack end and a response control unit which decreases the response of a current control when a steering wheel is held. In addition, the recovery time of the response of the current control when reset from a judgment of the holding steering state is made shorter than normal only when the response control unit operates at the same time that the protecting function unit operates or the response control unit is made inoperative when the protecting function unit operates. Therefore, vibration and/or noise generated in the steering in the holding steering state can be reduced, while the operating performance of the steering wheel when the steering wheel is steered can be secured, and a steering feel can be attained which is free from the strange feeling or torque variation even when the response control is in operation.

In addition, the response control unit includes a steering wheel operating state detection module adapted to output a signal which indicates that the steering is held when detecting the holding steering state as a result of a detection for a steering wheel operating state and not to output the signal which indicates the holding steering state when detecting that the steering wheel is in any other state than the holding steering state, and a switching control module adapted to set the response of the current control unit such that a response resulting when the holding steering state is detected becomes slower than a response resulting when the holding steering state is not detected.

Hereinafter, embodiments of the invention will be described by reference to the drawings.

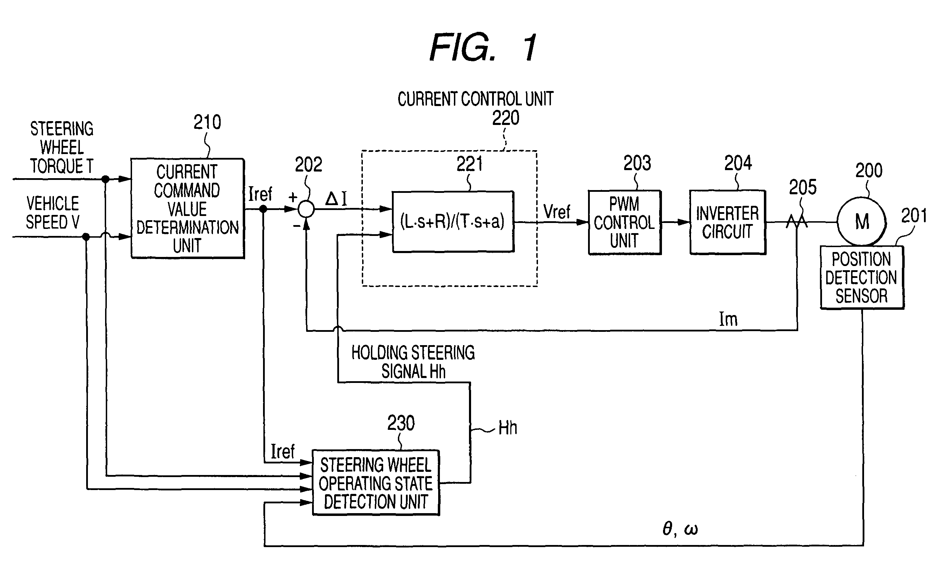

Firstly, the configuration of a control system of an electric power steering system including a response control unit which constitutes a premise of the invention will be described by reference to Fig. 1 which shows the configuration.

A steering wheel torque T detected in a torque sensor and a vehicle speed V detected in a vehicle speed sensor or transmitted from a CAN (Controller Area Network) are inputted into a current command value determination unit 210, and a current command value Iref determined in the current command value determination unit 210 is then inputted into a subtracter unit 202. A motor current Im detected in a current detection unit 205 is inputted into the subtracter unit 202, where a deviation AI (= Iref - Im) between the current command value Iref and the motor current Im is calculated, and the deviation ΔI so calculated is inputted into a current controller 221 within a current control unit 220.

The current controller includes, for example, a lead lag function. In this embodiment, (L·s + R) / (T·s + a) is used as an example of the lead lag function. Here, L denotes an inductance value of a motor 200, R denotes a resistance value of the motor 200, T denotes a time constant of the current controller 221, and "a" denotes a constant. A voltage command value Vref from the current control unit 220 is inputted into a PWM control unit 203, and the PWM control unit 203 outputs a PWM signal to an inverter circuit 204, whereby a PWM signal based the voltage command value Vref is indicated to the inverter circuit 204. The inverter circuit 204 supplies the motor current Im to the motor 200 based on the PWM signal.

A steering wheel state detection unit 230 is provided for detecting a state in which a steering wheel is rotated or operated, and when the steering wheel state detection unit 230 detects the holding steering state, a signal which indicates the holding steering state or a steering holding signal Hh is outputted, and this steering holding signal.Hh is inputted into the current controller 221.

Here, the steering wheel state detection unit 230 will be described which constitutes a constituent element of the response control unit. At least one of steering wheel torque T, current command value Iref, vehicle speed V, motor angle θ, and motor rotational speed (angular velocity) ω is inputted into the steering wheel state detection unit 230, and the steering wheel state detection unit 230 determines an operating state of the steering wheel based on at least one of steering wheel torque T, current command value Iref, vehicle speed V, motor angle θ, and motor rotational speed (angular velocity) ω. The steering wheel state detection unit 230 is made to output a steering holding signal Hh when detecting the holding steering state and is made not to output a steering holding signal Hh when detecting that the steering wheel is normally steered. Note that the motor angle θ and the motor angular velocity ω can be detected by a rotor position signal, for example, by a rotor position detection sensor 201 such as a resolver or a Hall sensor.

The current controller 221 outputs a voltage command value Vref based on whether or not the steering holding signal Hh exists and the deviation ΔI. Specifically, when the steering wheel is judged to be in the holding steering state and the steering holding signal Hh is outputted from the steering wheel state detection unit 230 to the current controller 221, the time constant T of the current controller 221 is increased, so as to decrease the current control response to a current control response for the holding steering state. In other words, the control gain of the current control unit 220 is decreased from a gain for the steering state to a gain for the holding steering state, whereby a response control can be implemented.

On the other hand, when no steering holding signal Hh is outputted from the steering wheel state detection unit 230, that is, when the steering wheel is judged to be in the steering state, the time constant T of the current controller is decreased, so as to restore the current control response to the current control response for the steering state. In other words, the gain (control gain) of the current control means is increased from the gain for the holding steering state to the gain for the steering state.

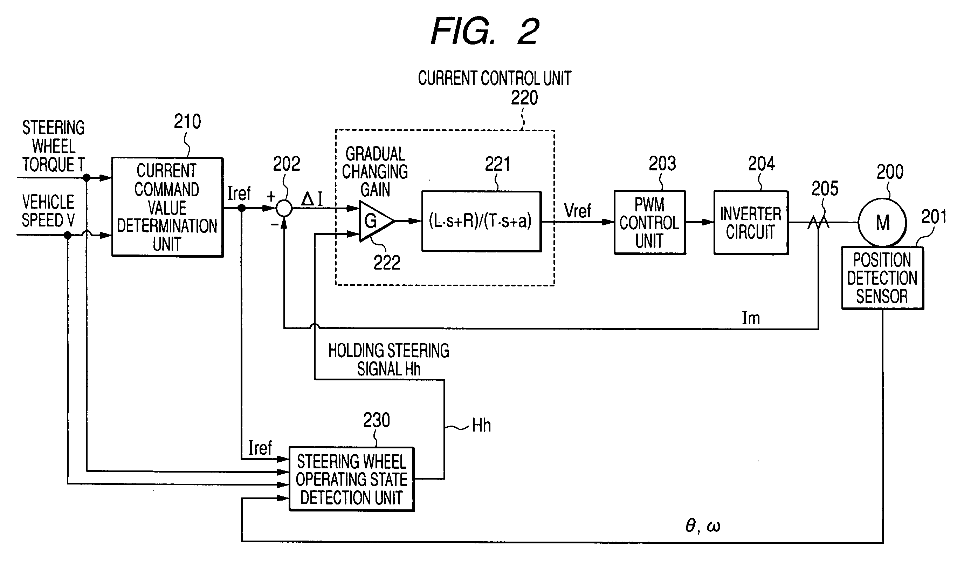

In the example shown in Fig. 1, although the current control unit 220 is made up of the current controller 221 only, a gradual changing gain module 222 which ramps up or ramps down may, as is shown in Fig. 2, be provided before the current controller 221, so that the steering holding signal Hh is made to be inputted into the gradual changing gain module 222 so provided.

In addition, when the steering holding signal Hh is inputted from the steering wheel state detection unit 230 into the gradual changing gain module 222, a gradual changing gain is decreased, so that the current control response is decreased from the gain for the steering state to the gain for the holding steering state. A similar function and advantage to those provided by the configuration shown in Fig. 1 can also be provided by this configuration.

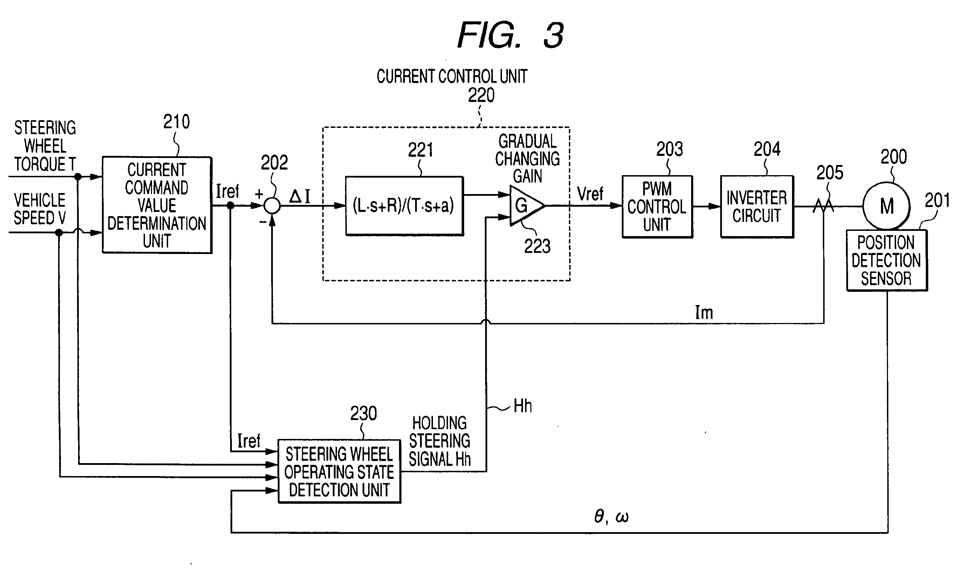

In addition, as is shown in Fig. 3, a gradual changing gain module 223 may be provided after the current controller 221, so that the steering holding signal Hh is made to be inputted into the gradual changing gain module 223 so provided. In this case, too, when the steering holding signal Hh is inputted from the steering wheel state detection unit 230 into the gradual changing gain module 222, a gradual changing gain is decreased, so that the current control response is decreased from the gain for the steering state to the gain for the holding steering state. In other words, the control gain of the current control unit 220 is decreased from the gain for the steering state to the gain for the holding steering state. A similar function and advantage to those provided, by the configuration shown in Fig. 1 or 2 can also be provided by this configuration.

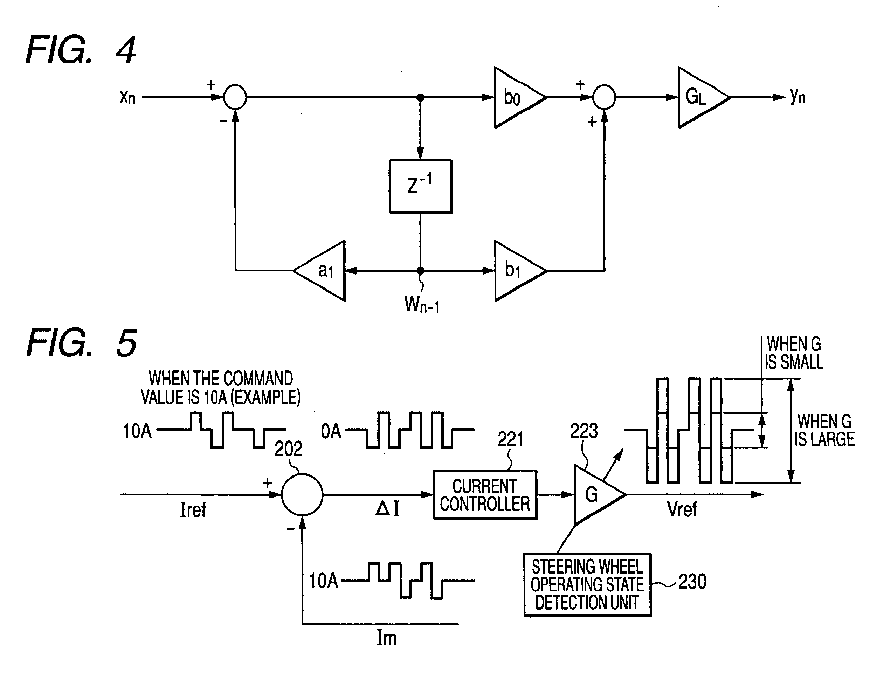

Fig. 4 is a circuit diagram which shows a specific configuration example of the current controller 221, and in this current controller 221, even in the event that the current control response is changed abruptly, the output is not changed abruptly by calculating an integral intermediate variable ($W_{n-1}$) such that the output becomes constant before and after the current response is changed.

When expressed by an equation, a specific example of resetting the intermediate variable ($W_{n-1}$) will be as below.

**[Equation 2]**

$$y_n = G_L \{ b_0 (x_n - a_1 W_{n-1}) + b_1 W_{n-1} \}$$
$$= G_L b_0 x_n + G_L (b_1 - b_0 a_1) W_{n-1}$$

**[Equation 3]**

$$W_{n-1} = \frac{y_n - G_L b_0 x_n}{G_L (b_1 - b_0 a_1)}$$

Consequently, in Equation 3 above, when $y_n$ is substituted by the previous output $y_{n-1}$, the current output $y_n$ equals $y_{n-1}$.

Fig. 5 is an exemplary diagram which explains a changing principle of the current control response (the example shown in Fig. 3). For example, when the current command value Iref is 10 A, there exists a current wave form as shown, and there exists a current waveform of 10 A as shown for the current detection value Im. Consequently, there exists a current waveform of 0 A as shown for the deviation ΔI. The deviation ΔI is inputted into the current controller 221, the steering holding signal Hh from the steering wheel state detection unit 230 is inputted into the gradual changing gain module 223, and the voltage command value Vref is outputted from the gradual changing gain module 223. When the steering wheel is held, the response of the current control unit 220 is decreased by the steering holding signal Hh, whereby vibration is decreased, and noise generated when holding the steering is reduced.

Next, specific judgment conditions for judging the holding steering state in the steering wheel state detection unit 230 will be described. For example, the following conditions (A1) to (A7) will be raised as conditions for judging the holding steering state.

(A1) A derivative value (time variation) of the steering wheel torque T is equal to or less than a predetermined value.
(A2) The steering wheel torque T falls within a predetermined value range. Namely, T1 < T < T2.
(A3) The vehicle speed V is equal to or less than a predetermined value. For example, it will be where V ≤ 8 kph. (A4) When there exists no change in motor angle θ, that is, it will be where there exists no change in signal from the sensor for detecting the motor angle. For example, when a Hall sensor is used as the motor angle sensor, it will be where the Hall IC pattern continuing time ≥ 0.2 second.
(A5) A derivative value of the motor angle θ is equal to or less than a predetermined value.
(A6) The motor angular velocity m is equal to or less than a predetermined value.
(A7) The current command value Iref falls within a predetermined value range. That is, it will be where Iref1 < Iref < Iref2 is established, and for example, 2A < Iref < 93 A.

Namely, combining some of the judgment conditions (A1 to A7) for judging the holding steering state and they are added to calculate AND operation. Then, in the event that the result becomes "TRUE," the steering wheel state detection unit 230 determines that the steering wheel state has been shifted (switched) from the steering state to the holding steering state, and the steering wheel state detection unit 230 outputs the steering holding signal Hh to the current control unit.

When they are any other condition than the judgment conditions (A1 to A7) for judging the holding steering state or the result of the AND operation is "FALSE," the steering wheel state detection unit 230 determines that the steering wheel state has been returned (shifted) from the holding steering state to the steering state, the steering wheel operating state judgment unit 230 makes not to output the steering holding signal Hh therefrom.

For example, when the vehicle speed V is fast, in order to secure the steering wheel operating performance at the time of driving, the current control response is made to remain in the current control response for the steering state at all times.

In addition, when the current command value Iref is small, in order to secure the steering wheel operating performance in the vicinity of the neutral position of the steering wheel, the current control response is returned from the current control response for the normal steering wheel operation state to the current control response for the holding steering state.

Furthermore, when the current command value Iref is large, for example, in the electric power steering system shown in Fig. 1, when some value is included in the constant "a" of the current controller 221, when the current control response is decreased, the gain is also decreased, and a decrease in output in a region where the current is large becomes large. Therefore., the current control response is returned from the current control response for the holding steering state to the current control response for the steering state.

In addition to the response controlling function, in the invention, a protecting function unit including a rack end protecting function and an overheat protecting function is provided, whereby an efficient control of the protecting functions together with the response control is realized. Namely, the protecting function unit including the overheat protecting function to prevent the overheat of the motor and/or the whole of the control system and the rack end protecting function to decrease the current in the vicinity of the rack end and the response control unit which decreases the response of the current control in judgment of the holding steering state are provided. Only when the response control unit operates at the same time that the protecting functions operate, the recovery time of the response when reset from the judgment of the holding steering state is made shorter than when in normal, or when the rack end protecting function operates, the response control unit is made not to operate.

The response control unit ramps down the response of the current control for a certain period of time at the same time that it determines the holding steering state, so as to decrease the current control response to a predetermined response. To the contrary, when the response control unit determines that the steering wheel state has been switched from the holding steering state to the steering state, the response control unit is set to recover the response to the response for the steering state in a predetermined period of time. In the invention, only when the protecting functions operate and the judgment conditions for judging the steering holding are met, and operating conditions of the response control function are met, the recovery time of the response of the current control is set shorter than when normal, so that the response of the current control is made to be recovered within a short period of time. In addition, the gradual changing time of the response when the steering wheel operating state is switched from the judgment of steering state to the judgment of the holding steering state and the gradual changing time (the recovery time) of the response when the steering wheel operating state is switched from the judgment of the holding steering state to the judgment of the steering state are made to be set individually.

Here, the rack end protecting function will be described. When a steering wheel operating limit position is reached before the operation is stopped by a stopper due to the tire being brought into collision with a curbstone, for example, or when the operation is stopped by the stopper, in the event that the steering wheel is attempted to be rotated furthermore or is held in that position, in case the steering wheel is so held with the current remaining increased, the motor and the control unit (ECU) are overheated. The rack end protecting function is such as to meet the demand for implementation of a protecting control to decrease the current so as to prevent the overheat of the relevant components, and the rack end (or the vicinity thereof) can be judged by steering wheel torque T, current command value Iref and motor angle θ. Namely, the rack end can be judged based on whether or not a state where both the steering wheel torque T and the current command value Iref are equal to or more than respective threshold values and a change in motor angle θ remains within a predetermined value continues over a predetermined period of time.

In addition, the overheat protection is mainly intended to prevent the abnormal overheat of the motor and the whole of the control system, and an operating condition of the overheat protecting function is that the motor is judged to be overheated abnormally when a temperature estimation value of the motor is equal to or more than a predetermined value, and the current is gradually limited as in the way in which the current is limited for protection of the rack end. As the estimation of the motor temperature, there are estimations from a motor phase current and the temperature of the control unit.

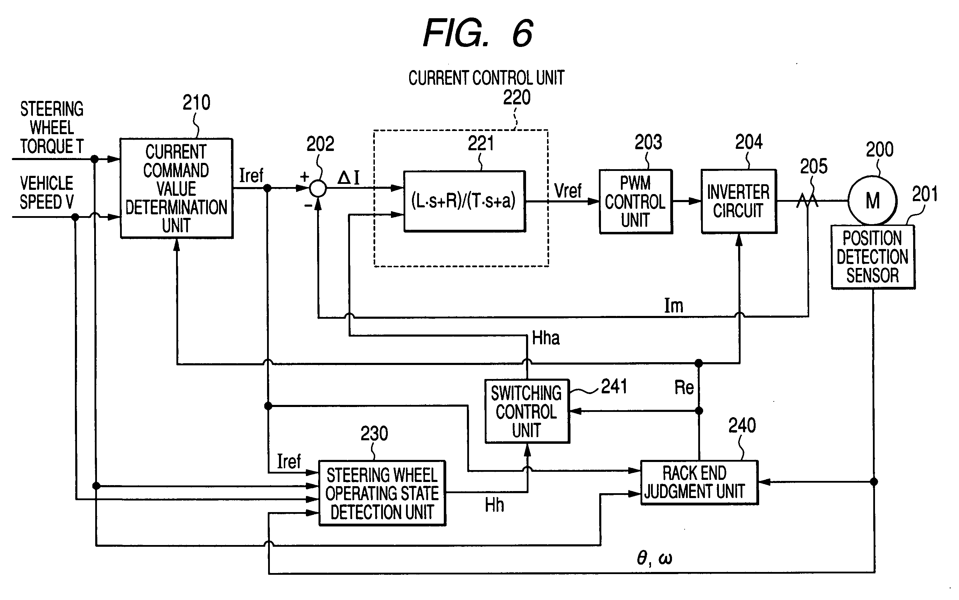

In Fig. 6, a rack end judgment unit 240 as a rack end protecting function is provided in the control system shown in Fig. 1, so that when judging the vicinity of a rack end, the rack end judgment unit 240 outputs a rack end signal Re to be inputted into the current command value determination unit 210 and the inverter circuit 204. Accordingly, the current command value Iref from the current command value determination unit 210 is limited and the current (Im) that is to be supplied to the motor 200 is limited. In addition, a switching control unit 241 is provided into which the steering holding signal Hh from the steering wheel state detection unit 230 is inputted, so as to control parameters and the recovery time based on the rack end signal Re.

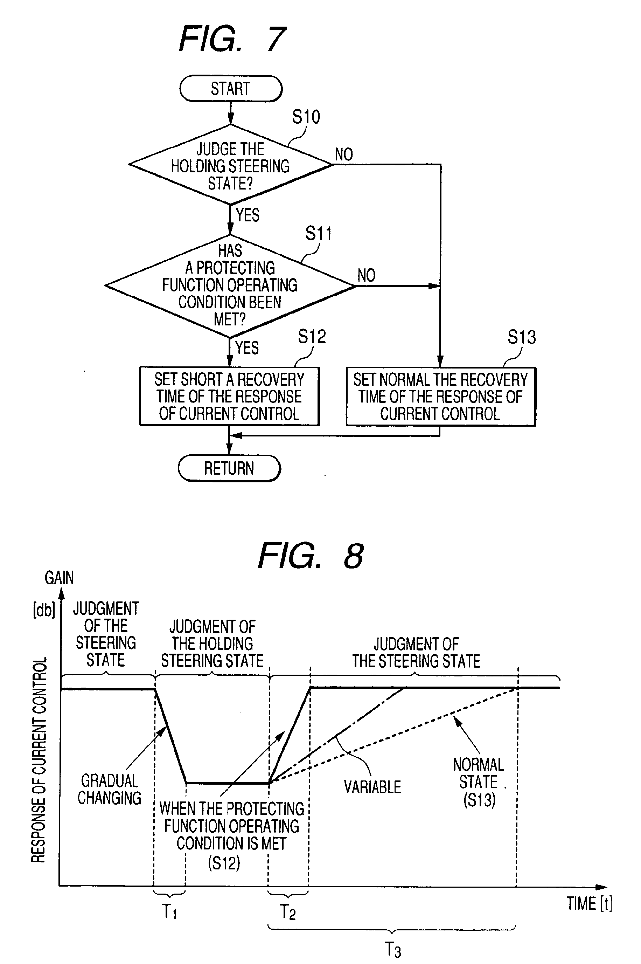

An operation example of the control system of the electric power steering system that is configured as has been described heretofore will be described by reference to a flowchart shown in fig. 7.

Firstly, whether or not the holding steering state is judged in the steering wheel operating state judgment unit 230 (step s10), and if the steering wheel is judged not in the holding steering state but in the steering state, the recover time of the response of the current control.is set to the normal recovery time (step S13). In addition, the rack end judgment unit 240 determines based on steering wheel torque T, current command value Iref and motor angle θ whether or not the vicinity of the rack end is reached, and if judging that the vicinity of the rack end or the rack end itself has been reached, the rack end judgment unit 240 outputs a rack end signal Re. Namely, the rack end judgment unit 240 determines the rack end (or the vicinity thereof) when the state has continued over the predetermined period of time in which both the steering wheel torque T and the current command value Iref remain within the respective threshold values and the change in motor angle θ remains within the predetermined value and outputs a rack end signal Re. The rack end signal Re is inputted into the switching control unit 241 and is also inputted into the current command value determination unit 210 and the inverter circuit 204. As this occurs, for example, in the current command value determination unit 210, the output is limited according to the time that has elapsed. For example, a gain module which decreases its gain from a 100% gain to a 50% gain at normal times is provided within the current command value determination unit 210.

If the steering wheel is judged as the holding steering state in the step S10, the steering wheel operating state judgment unit 23.0 outputs a steering holding signal Hh, and the switching control unit 241 determines whether or not the protecting function operating condition is met (step S11). Namely, the switching control unit 241 determines whether or not the rack end signal Re has been inputted from the rack end judgment unit 240. If the protecting function operating condition is judged to be met, that is, if the rack end signal Re has been inputted, the switching control unit 241 sets short the recover time of the response of the current control (step S12), and the operation flow returns.

In addition, if the protecting function operating condition is judged not to be met in the step S11, that is, if the rack end signal Re is judged not to have been inputted, the switching control unit 241 sets the recovery time to the normal recovery time, and the operation flow returns (step S13).

[First Embodiment]

In this way, in a first embodiment of the invention, only when the response control unit operates at the same time that the rack end protecting function operates, the recovery time of the response of the current control when reset from the judgment of the steering holding is made shorter than normal, whereas if the rack end protecting function is not in operation, the recovery time of the response of the current control is made to remain as when normal.

Fig. 8 shows how it works. When the steering wheel operating state is judged to be switched from the steering state to the holding steering state, the response is made to ramp down over a period of time T1, and when the protecting function operating condition is met while it is judged the steering wheel is in the holding steering state, the response is made to ramp down as is indicated by a solid line for a short period of time T2 for judgment of the steering wheel operating state, whereas if the protecting function operating condition is not met while it is judged that the steering wheel is in the holding steering state, the normal long steering wheel operating state judgment time T3 as is indicated by a broken line is taken.

In this embodiment, the recover time, during which the response of the current control is recovering to the normal response of the current control, is made shorter only when the response of the current control is decreased as a result of the judgment of the holding steering state and also the protecting function (the rack end protection) is in operation.

[Second Embodiment]

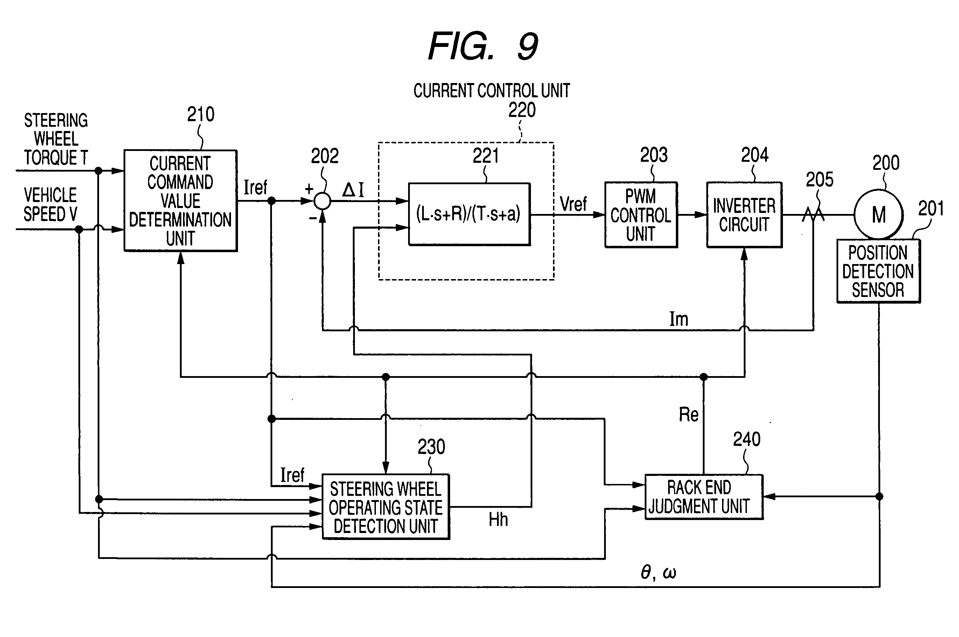

In addition, Fig. 9 shows a second embodiment of the invention, in which a rack end judgment unit 240 as a rack end protecting function is provided, so that when judging that the vicinity of the end of a rack is reached, the rack end judgment unit 240 outputs a rack end signal Re so as to be inputted into a steering wheel operating state judgment unit 230, whereby a current command value Iref from a current command value determination unit 210 is limited, and a current (Im) that is to be supplied to a motor 200 is limited. In addition, in the event that the rack end signal Re is inputted into the steering wheel operating state judgment unit 230 and the rack end signal Re is judged, a response control function is switched off, and the steering holding signal Hh is made not to be outputted from the steering wheel operating state detection unit 230.

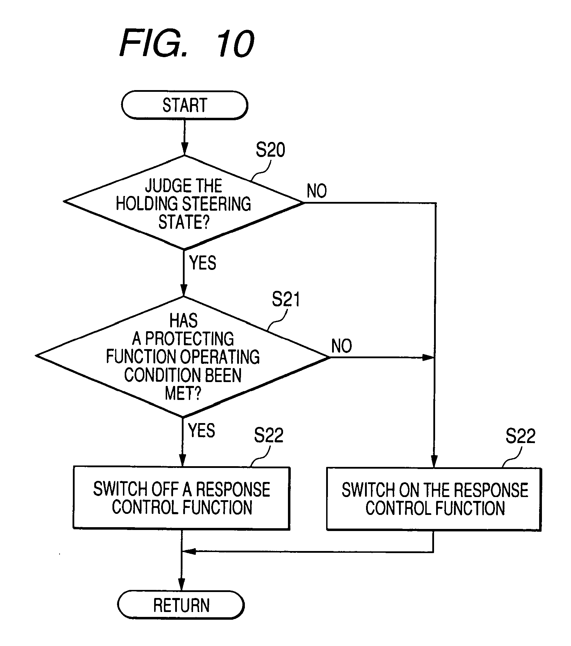

An operation example of the control system that is configured as has been described above will be described by reference to a flowchart shown in fig. 10,

Firstly, whether or not the holding steering state is judged in the steering wheel operating state judgment unit 230 (step S20), and if the steering wheel is judged not in the holding steering state but in the steering state, the response control function is activated, and the operation flow returns (step S23). In addition, the rack end judgment unit 240 determines based on steering wheel torque T, current command value Iref and motor angle θ whether or not the vicinity of the rack end is reached, and if judging that the vicinity of the rack end or the rack end itself has been reached, the rack end judgment unit 240 outputs a rack end signal Re. If it is judged the holding steering state in the step S20, whether or not the protecting function operating condition is met is judged (step S21), and if it is judged that the protecting function operating condition is met, that is, if the rack end signal Re is inputted from the rack end judgment unit 240, the response control function is switched off, and the steering holding signal Hh is made not to be outputted therefrom (step S22), the operation flow returning. Namely, if the rack end signal Re has been inputted, even in the holding steering state, the response control based on the steering holding signal Hh is not performed.

In addition, if it is judged in the step S21 that the protecting function operating condition is not met, that is, if no rack end signal Re has been inputted from the rack end judgment unit 240, the response control function is switched on so as to enable the response control, and the operation flow returns (step S23).

In this embodiment, in this way, when it is judged that the steering wheel is in the holding steering state and at the same time, the rack end protecting function operates, the response controlling function is made not to operate.

Note that while in the first and second embodiments, the protecting function unit is described as being provided in the control system shown in Fig. 1 which includes the response control function, a similar control can be enabled even though the rack end protecting function is provided in the control systems shown in Figs. 2 and 3.

Next, while in the embodiments that have been described heretofore, the rack end protecting function has been described as functioning as the protecting function unit, a control by the overheat protecting function alone or a control by a parallel combination of the rack end protecting function and the overheat protecting function is possible.

[Third Embodiment]

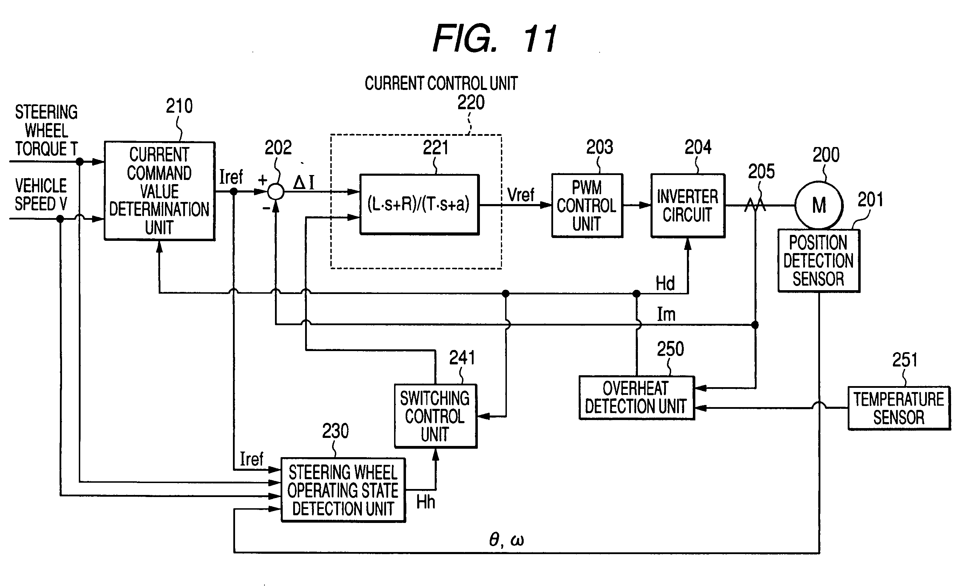

Third embodiment of the invention shown in Fig. 11 illustrating a configuration example in which the overheat protection and the response control are performed while associating it with the configuration example shown in Fig. 6, and an overheat detection unit 250 is provided for detecting overheat based on a motor current Im and a temperature sensor 251. When the overheat detection unit 250 detects overheat of the motor and/or the whole control system, the overheat detection unit 250 outputs an overheat signal Hd. Then, as with the rack end signal Re, the overheat signal Hd is inputted a current command value determination unit 210 and an inverter circuit 204 so as to limit the current, and the same signal is also inputted into a switching control unit 241. As this occurs, for example, in the current command value determination unit 210, the output is limited according to the time that has elapsed. For example, a gain module which decreases its gain from a 100% gain to a 50% gain at normal times is provided within the current command value determination unit 210. The switching control unit 241 determines firstly, as with the rack end, whether or not the operating condition for the protecting function is met, that is whether or not the overheat signal Hd has been outputted from the overheat detection unit 250, and if the overheat signal Hd has been outputted, the recovery time of the response of the current control is set short, whereas if the overheat signal Hd has not been outputted, the recovery time of the response of the current control is set to the normal recovery time, whereby a response control similar to that associated with the rack end can be performed.

Note that while in this embodiment, overheat is detected based on the motor current Im and the temperature sensor 251, the state of the motor is detected by using at least one of the steering wheel torque T, vehicle speed V, motor angle θ, motor current Im, current command value Iref, and battery voltage, and overheat can be detected from the motor state so detected.

In addition, also in the control by the overheat protecting function alone, as with the case shown in Fig. 9 (second embodiment), in the event that an overheat signal Hd is inputted into a steering wheel operating state detection unit 230 so as to detect overheat, that is, if an overheat signal Hd is outputted from the overheat detection unit 250, a response controlling function is switched off, whereas if no overheat signal Hd is outputted therefrom, the response controlling function is switched on.

[Fourth Embodiment]

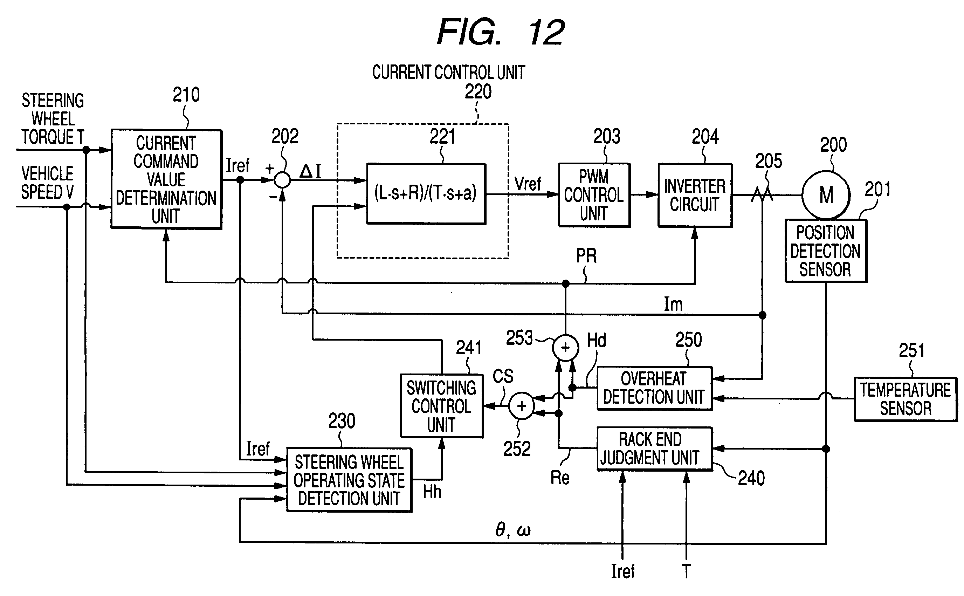

Furthermore, the fourth embodiment shown in Fig. 12 illustrating a configuration example in which the rack end protecting function and the overheat protecting function are controlled in parallel while associating it with the configuration examples shown in Figs. 6 and 11, a rack end judgment unit 240 and an overheat detection unit 250 are provided, and a rack end signal Re and an overheat signal Hd are inputted into an OR circuits 252 and 253, respectively. A control signal CS from the OR circuit 252 is inputted into a switching control unit. 241, and a protection signal PR from the OR circuit 253 is inputted into a current command value determination unit 210 and an inverter circuit 204.

In the case of this embodiment, when a rack end signal Re is outputted from the rack end judgment unit 240 or an overheat signal Hd is outputted from the overheat detection unit 250, a control signal CS is outputted from the OR circuit 252 so as to be inputted into the switching control unit 241, while a protection signal PR is outputted from the current command value determination unit 210 and the inverter circuit 204. The switching control unit 214 firstly determines whether or not a protecting function operating condition is met, that is, whether or not the overheat signal Hd has been outputted from the overheat detection unit 250 or whether or not the rack end signal Re has been outputted from the rack end judgment unit 240, that is, whether or not the control signal CS has been inputted from the OR circuit 252, if the control signal CS is judged to have been inputted, the recovery time of the response of the current control is set shorter. In this case, the protection signal PR is outputted from the OR circuit 253 so as to be inputted into the current command value determination unit 210 and the inverter circuit 204, whereby the current is also limited.

In addition, if no control signal CS is inputted into the switching control unit 241 from the OR circuit 252, the recovery time of the response of the current control is set to the normal recovery time. In this case, since no protection signal PR is outputted from the OR circuit 253, either, the current limitation by the current command value determination unit 210 and the inverter circuit 204 is not performed.

Also in this parallel control of the rack end protecting function and the overheat protecting function, as with the case shown in Fig. 9 (second embodiment), the protection signal PR is inputted into a steering wheel operating state judgment unit 230, and if overheat or the vicinity of the rack end is judged, the response control function may be switched off, whereas if neither overheat nor the vicinity of the rack end is judged and no control signal PR is outputted, the response control function may be switched on.

Note that while in the third and fourth embodiments, the protecting function unit is described as being provided in the control system shown in Fig. 1 which includes the response control function, a similar control is possible even in the event that the rack end protecting function and the overheat protecting function are provided in the control systems shown in Figs. 2 and 3.

In addition, the recovery time T2 shown in Fig. 8 may be adjusted as indicated by an alternate long and short dash line. Namely, since the control gain is decreased due to the protecting function operating and vibration or the like is generated in response, by setting an appropriate recovery time according to the degrees of protection (the ratio of output reduction), the problem mentioned in the early part of the specification can be solved while suppressing minute vibration generated in the holding steering state.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. An electric power steering system comprising:

    a motor for imparting a steering assist force to a steering system of a vehicle;
    a current command value determination unit which determines a current command value based on a steering torque and a vehicle speed;
    a motor angular velocity detection unit which detects or estimates an angular velocity of the motor;
    a drive control unit which controls the motor based on the current command value so determined;
    a protecting function unit which prevents an overheat of the motor or a whole of a control system; and
    a response control unit which decreases a response of a current control when it is judged that a steering wheel is in a holding steering state in which the steering wheel is held.

2. The electric power steering system as set forth in Claim 1, wherein
the response of the current control is made to be switched based on a judgment made by the protecting function unit.

3. The electric power steering system as set forth in Claim 1, wherein
only when the response control unit operates at the same time as the protecting function unit operates, a recovery time of the response of the current control when reset from a judgment of the holding steering state is made shorter than a normal state.

4. The electric power steering system as set forth in Claim 1, wherein
when the protecting function unit operates, the response control unit is made not to operate.

5. The electric power steering system as set forth in Claim 1, wherein there are set:

    a first gradual changing time of the response of the response control unit when shifting from a judgment of a steering state in which the steering wheel is rotated to the judgment of the holding steering state and
    a second gradual changing time of the response of the response control unit when shifting from the judgment of the holding steering state to the judgment of the steering state,
    wherein the first and second gradual changing time are set individually.

6. The electric power steering system as set forth in Claim 1, wherein
the protecting function unit includes at least one of a rack end protecting function and an overheat protecting function.

7. The electric power steering system as set forth in Claim 1, wherein
the response control unit comprises:

    a steering wheel operating state detection module which:

        detects a steering wheel operating state;
        outputs a signal which indicates the holding steering state when detecting the holding steering state; and
        does not to output the signal which indicates the holding steering state when detecting that the steering wheel is in any other state than the holding steering state; and

    a switching control module which sets the response of the current control unit such that a response resulting when the holding steering state is detected becomes slower than a response resulting when the holding steering state is not detected.

8.  The electric power steering system as set forth in Claim 7, wherein
    the response control unit controls such that:

    making the response of the current control ramp down for a period of time T1 at the same time as the holding steering state is detected from the steering state in the steering wheel operating state detection module; and
    making the response of the current control ramp up for a period of time T2 at the same time as a release of the holding steering state is detected in the steering wheel operating state detection module, and

    wherein the periods of time T1 and T2 are set individually.

9.  The electric power steering system as set forth in Claim 7, wherein
    the response control unit controls such that:

    after a time when the protecting function unit is not in operation, the steering wheel operating state detection module outputs the signal which indicates the holding steering state and the response control unit controls to make the response of the current control ramp down by the response control unit, making the response of the current control ramp up for a period of time T3, when the steering wheel operating state detection unit cancels the signal which indicates the holding steering state; and
    after a time when the protecting function unit is in operation, the steering wheel operating state detection module outputs the signal which indicates the holding steering state and the response control unit controls to make the response of the current control ramp down, making the response of the current control ramp up for a period of time T2, when the steering wheel operating state detection unit cancels the signal which indicates the steering holding, and
    wherein the periods of time T3 and T2 are set individually.

# FIG. 1

CURRENT CONTROL UNIT

STEERING WHEEL TORQUE T

VEHICLE SPEED V

**210**
CURRENT COMMAND VALUE DETERMINATION UNIT

Iref

**202**

+

−

ΔI

**220**

**221**
$(L \cdot s + R)/(T \cdot s + a)$

Vref

**203**
PWM CONTROL UNIT

**204**
INVERTER CIRCUIT

**205**

**200**
M

**201**
POSITION DETECTION SENSOR

Im

HOLDING STEERING SIGNAL Hh

Hh

Iref

**230**
STEERING WHEEL OPERATING STATE DETECTION UNIT

$\theta, \omega$

EP 1 935 753 A1

*FIG. 2*

CURRENT CONTROL UNIT
220

STEERING WHEEL TORQUE T

VEHICLE SPEED V

210
CURRENT COMMAND VALUE DETERMINATION UNIT

Iref

202
+ −
ΔI

GRADUAL CHANGING GAIN
G
222

221
(L·s+R)/(T·s+a)

Vref

203
PWM CONTROL UNIT

204
INVERTER CIRCUIT

205

200
M
201

POSITION DETECTION SENSOR

Im

HOLDING STEERING SIGNAL Hh

230
Hh

Iref

STEERING WHEEL OPERATING STATE DETECTION UNIT

θ, ω

## FIG. 3

CURRENT CONTROL UNIT
220

EP 1 935 753 A1

## FIG. 4

## FIG. 5

WHEN THE COMMAND VALUE IS 10A (EXAMPLE)

WHEN G IS SMALL

WHEN G IS LARGE

10A

0A

221

223

CURRENT CONTROLLER

G

Iref

$\Delta$ I

Vref

10A

Im

STEERING WHEEL OPERATING STATE DETECTION UNIT — 230

202

EP 1 935 753 A1

*FIG. 6*

CURRENT CONTROL UNIT 220

STEERING WHEEL TORQUE T

VEHICLE SPEED V

CURRENT COMMAND VALUE DETERMINATION UNIT — 210

Iref

$\Delta I$ — 202

$(L \cdot s + R)/(T \cdot s + a)$ — 221

Vref

PWM CONTROL UNIT — 203

INVERTER CIRCUIT — 204

205

M — 200

POSITION DETECTION SENSOR — 201

Im

Re

Hha

SWITCHING CONTROL UNIT — 241

Hh

STEERING WHEEL OPERATING STATE DETECTION UNIT — 230

Iref

RACK END JUDGMENT UNIT — 240

$\theta, \omega$

## FIG. 7

START

S10
JUDGE THE
HOLDING STEERING
STATE? — NO →

↓ YES

S11
HAS
A PROTECTING
FUNCTION OPERATING
CONDITION BEEN
MET? — NO →

↓ YES

S12
SET SHORT A RECOVERY
TIME OF THE RESPONSE
OF CURRENT CONTROL

S13
SET NORMAL THE RECOVERY
TIME OF THE RESPONSE OF
CURRENT CONTROL

RETURN

## FIG. 8

GAIN
[db]

RESPONSE OF CURRENT CONTROL

JUDGMENT
OF THE
STEERING
STATE

JUDGMENT OF
THE HOLDING
STEERING STATE

JUDGMENT OF
THE STEERING STATE

GRADUAL
CHANGING

WHEN THE PROTECTING
FUNCTION OPERATING
CONDITION IS MET
(S12)

VARIABLE

NORMAL
STATE
(S13)

TIME [t]

$T_1$     $T_2$

$T_3$

# FIG. 9

CURRENT CONTROL UNIT
220

STEERING WHEEL TORQUE T

VEHICLE SPEED V

210
CURRENT COMMAND VALUE DETERMINATION UNIT

Iref

202
+
−

ΔI

221
$(L \cdot s + R)/(T \cdot s + a)$

Vref

203
PWM CONTROL UNIT

204
INVERTER CIRCUIT

205

200
M

201
POSITION DETECTION SENSOR

Im

Re

230
STEERING WHEEL OPERATING STATE DETECTION UNIT

Iref

Hh

240
RACK END JUDGMENT UNIT

θ, ω

EP 1 935 753 A1

# FIG. 10

START

S20

JUDGE THE
HOLDING STEERING
STATE?

NO

YES

S21

HAS
A PROTECTING
FUNCTION OPERATING
CONDITION BEEN
MET?

NO

YES

S22

SWITCH OFF A RESPONSE
CONTROL FUNCTION

S22

SWITCH ON THE RESPONSE
CONTROL FUNCTION

RETURN

# FIG. 11

CURRENT CONTROL UNIT
220

STEERING WHEEL TORQUE T

VEHICLE SPEED V

210 — CURRENT COMMAND VALUE DETERMINATION UNIT

Iref

202 — $\Delta I$ (+ / −)

221 — $(L \cdot s + R)/(T \cdot s + a)$

Vref

203 — PWM CONTROL UNIT

204 — INVERTER CIRCUIT

205

200 — M

201 — POSITION DETECTION SENSOR

Hd

Im

250 — OVERHEAT DETECTION UNIT

251 — TEMPERATURE SENSOR

241 — SWITCHING CONTROL UNIT

230 — STEERING WHEEL OPERATING STATE DETECTION UNIT

Iref

Hh

$\theta, \omega$

EP 1 935 753 A1

## FIG. 12

EP 1 935 753 A1

FIG. 13

EP 1 935 753 A1

FIG. 14

**European Patent Office**

## EUROPEAN SEARCH REPORT

Application Number

EP 07 02 4660

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 299 648 A (WATANABE MASAKI [JP] ET AL) 5 April 1994 (1994-04-05) * claim 1 * | 1 | INV. B62D5/04 |
| Y | EP 0 903 279 A (KOYO SEIKO CO [JP]) 24 March 1999 (1999-03-24) * paragraph [0012]; figure 4 * | 1 | |
| Y | JP 11 286278 A (OMRON TATEISI ELECTRONICS CO; NIPPON SEIKO KK) 19 October 1999 (1999-10-19) * abstract * | 1 | |
| Y | EP 0 249 506 A (MITSUBISHI ELECTRIC CORP [JP]) 16 December 1987 (1987-12-16) * abstract; figure 2 * | 1 | |
| A | US 2005/263339 A1 (ONO HITOSHI [JP]) 1 December 2005 (2005-12-01) * abstract * | 1-9 | |
| A | DE 10 2005 011379 A1 (HITACHI LTD [JP]) 6 October 2005 (2005-10-06) * abstract * | 1-9 | TECHNICAL FIELDS SEARCHED (IPC) B62D |

The present search report has been drawn up for all claims

| Place of search | Date of completion of the search | Examiner |
|---|---|---|
| Berlin | 2 April 2008 | Călămar, George |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 07 02 4660

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2008

| Patent document cited in search report | | Publication date | Patent family member(s) | | Publication date |
|---|---|---|---|---|---|
| US 5299648 | A | 05-04-1994 | JP | 2936211 B2 | 23-08-1999 |
| | | | JP | 5024547 A | 02-02-1993 |
| EP 0903279 | A | 24-03-1999 | DE | 69814775 D1 | 26-06-2003 |
| | | | DE | 69814775 T2 | 18-03-2004 |
| | | | JP | 3945870 B2 | 18-07-2007 |
| | | | JP | 11098680 A | 09-04-1999 |
| | | | US | 5925995 A | 20-07-1999 |
| JP 11286278 | A | 19-10-1999 | JP | 3601967 B2 | 15-12-2004 |
| EP 0249506 | A | 16-12-1987 | DE | 3789033 D1 | 24-03-1994 |
| | | | DE | 3789033 T2 | 29-09-1994 |
| | | | US | 4789040 A | 06-12-1988 |
| US 2005263339 | A1 | 01-12-2005 | CN | 1721251 A | 18-01-2006 |
| | | | DE | 102005024125 A1 | 22-12-2005 |
| | | | JP | 2005335645 A | 08-12-2005 |
| | | | KR | 20060046248 A | 17-05-2006 |
| DE 102005011379 | A1 | 06-10-2005 | JP | 2005262936 A | 29-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000108916 A

- JP 2001253358 A